# EUROPÄISCHE PATENTSCHRIFT

(11) **EP 2 149 245 B1**
(45) Veröffentlichungstag und Bekanntmachung des Hinweises auf die Patenterteilung: **18.05.2011**
(21) Anmeldenummer: 07818290.4
(22) Anmeldetag: 20.09.2007
(51) Int. Cl.: H04L 29/06

(54) **VERFAHREN UND DATENÜBERTRAGUNGSSYSTEM ZUR SICHEREN ÜBERTRAGUNG VON VIDEO- UND/ODER AUDIODATEN ÜBER EIN UNSICHERES ÖFFENTLICHES IP-BASIERTES NETZ**
METHOD AND DATA TRANSFER SYSTEM FOR SECURE TRANSMISSION OF VIDEO AND/OR AUDIO DATA VIA A NON-SECURE PUBLIC IP-BASED NETWORK
PROCÉDÉ ET SYSTÈME DE TRANSMISSION DE DONNÉES POUR UNE TRANSMISSION DE DONNÉES VIDEO ET/OU AUDIO PAR UN RÉSEAU IP PUBLIC NON SÉCURISÉ

(30) Priorität: 27.04.2007 DE 202007006077 U
(43) Veröffentlichungstag der Anmeldung: 03.02.2010
(73) Patentinhaber: Plazamedia GMBH, 85737 Ismaning (DE); Deutsche Telekom AG, 53113 Bonn (DE)
(72) Erfinder: LABONTE, Uli, 64625 Bensheim (DE); DESCH, Dietmar, 64673 Zwingenberg (DE); MAIBERGER, Hardy, 645 Stockstadt (DE); RUDOLPH, Sven, 01309 Dresden (DE); BRANDT, Thomas, 64846 Gross-Zimmern (DE); WIELAND, Chris, 85467 Neuching (DE); SCHEUFLER, Andreas, 85737 Ismaning (DE)
(74) Vertreter: Kampfenkel, Klaus
(86) Internationale Anmeldenummer: PCT/EP2007/008200
(87) Internationale Veröffentlichungsnummer: WO 2008/135073

(56) Entgegenhaltungen:
- WO-A-2004/082221
- US-A1- 2004 177 267

## Beschreibung

### Beschreibung

Die Erfindung betrifft ein Verfahren zum gesicherten Übertragen von Video- und/oder Audiodaten über ein unsicheres öffentliches IP-basiertes Netz, insbesondere das Internet. Darüber hinaus betrifft die Erfindung ein Datenübertragungssystem, welches insbesondere zur Durchführung des Verfahrens eingesetzt werden kann. Ferner betrifft die Erfindung eine Empfangsvorrichtung zum Einsatz in einem Solchen Datenübertragungssystem.

Ein derartiges system ist bekannt aus WO 2004/082221 und US 2004/177267.

Die Erfindung findet insbesondere im Bereich des Internetfernsehens (ITPV) sowie bei der IP-basierten Übertragung von Mediendaten Anwendung.

Bei einer klassischen Fernsehproduktion vor allem im Bereich der Live-Übertragung von Sportveranstaltungen werden zur Zeit ausschließlich klassische Übertragungswege über Satellit oder Rundfunkleitungen genutzt. Diese Übertragungsmedien werden sowohl für die Übertragung des Live-Signals vom Auszeichnungsort zu einer Sendeanstalt als auch zur Rückübertragung des eigentlichen Programmsignals zum Aufzeichnungsort verwendet. Diese Übertragungsart ist zwar erprobt und seit vielen Jahren im Einsatz. Die Verwendung einer Satellitenübertragungsstrecke als Rückkanal führt jedoch zu unerwünschten Verzögerungszeiten zwischen den aufgezeichneten Bildern und den zurück übertragenen Programmsignalen. Rundfunkleitungen, die als Rückkanal dienen, ermöglichen zwar eine Übertragung der Programmsignale nahezu in Echtzeit; jedoch sind die benötigten Hardware-Komponeneten und die Entgeltarife kostenintensiv.

Eine Rückübertragung von bearbeiteten Live-Bildern von der Sendeanstalt zum Aufzeichnungsort ist erforderlich, da Moderatoren oder Kommentatoren neben den am Ort des Geschehens aufgenommenen Livebildern auch die dem Fernsehzuschauer übermittelten Studiosignale sehen muß, um ihre Kommentare präzise an den im Fernsehen gezeigten Spielszenen und Grafikinformationen ausrichten zu können.

Der Erfindung liegt die Aufgabe zu Grunde, ein Verfahren sowie ein Datenübertragungssystem zur Verfügung zu stellen, mit welchem Mediendatenströme, insbesondere Video- und/oder Audiodatenströme kostengünstig und nahezu in Echtzeit in gesicherter Weise übertragen werden können.

Ein Kerngedanke der Erfindung ist darin zu sehen, Video- und/oder Audiodaten in gesicherter Form und zeiteffizient über ein öffentliches unsicheres IP-basiertes Netz, insbesondere das Internet, zu übertragen.

Das oben genannte technische Problem wird durch ein Verfahren nach Anspruch 1 und system nach Anspruch 2 zum gesicherten Übertragen von Video- und/oder Audiodaten über ein unsicheres öffentliches IP-basiertes Netz gelöst. Zunächst wird ein gesicherter VPN-Tunnel zwischen einer Sendeeinrichtung und einer Empfangseinrichtung über das unsichere IP-basierte Netz aufgebaut. Bereits an dieser Stelle sei erwähnt, dass die Sendeeinrichtung in einer Sendeanstalt aufgestellt sein kann, während die Empfangseinrichtung zum Beispiel in der Nähe eines Aufzeichnungsortes, beispielsweise ein Life-Übertragungsort, aufgestellt sein kann. Vorzugsweise ist die Empfangseinrichtung dann in einem Übertragungswagen angeordnet. Die zu übertragenden Videodaten werden in einen komprimierten Videodatenstrom kodiert. Der Videodatenstrom wird über den VPN-Tunnel in gesicherter Weise zur Empfangseinrichtung übertragen. Der empfangene Videodatenstrom wird dekodiert und für ein erstes Wiedergabegerät bereitgestellt. Der dekodierte Videodatenstrom kann als analoges oder digitales Videosignal vorliegen.

Vorteilhafte Weiterbildungen sind Gegenstand der Unteransprüche.

Bei einem bevorzugten Ausführungsbeispiel handelt es sich bei den zu übertragenen Videodaten um aufbereitete Studiodaten, die gemäß dem SDI (Serial Digital Interface)-Standard erzeugt worden sind. Unter aufbereiteten Studiodaten versteht man Videodaten, denen Zusatzinformationen, wie z. B. der aktuelle Tabellenstand bei einem Fußballspiel oder andere nützliche Informationen zugefügt worden sind. Die Studiodaten enthalten all die Informationen, die in dem Programm enthalten sind, welches von einer Sendeanstalt zu den Fernsehzuschauern ausgestrahlt wird. Somit enthalten die zu der Empfangseinrichtung zu übertragenden Videodaten den gleichen Inhalt wie das auszustrahlende Programm.

Ferner kann wenigstens eine Aufnahmeeinrichtung, wie zum Beispiel eine Videokamera handeln am Aufzeichnungsort aufgestellt sein.

Das von der Aufnahmeeinrichtung bereitgestellte Videosignal wird zusätzlich zu dem ersten Wiedergabegerät oder zu einem zweiten Wiedergabegerät übertragen. Auf diese Weise wird beispielsweise einem Sportreporter das "ungeschminkte" und originale Livebild dargestellt. Wird das von der Aufnahmeeinrichtung erzeugte Videosignal zum ersten Wiedergabegerät übertragen, so wird eine Bild-in-Bild-Technologie verwendet, um für einen Kommentator oder Moderator an einem einzigen Gerät sowohl das "ungeschminkte" Livebild als auch das von der Sendeeinrichtung übertragene Programm darstellen zu können. Alternativ können die von der Aufnahmeeinrichtung gelieferten Original-Videosignale und das von der Sendeeinrichtung übertragene Videosignal auf unterschiedlichen Bildschirmen dem Moderator oder Kommentator zur Verfügung gestellt werden.

Um die Datensicherheit zu erhöhen, können die zu übertragenden Videodaten vor der Übertragung über den gesicherten VPN-Tunnel zusätzlich unter Anwendung eines Verschlüsselungsverfahrens verschlüsselt werden. Empfangsseitig werden die verschlüsselt empfangenen Videodaten wieder entschlüsselt.

Der gesicherte VPN-Tunnel wird unter Ausführung eines Protokolls zur Herstellung eine virtuellen Netzwerkes (VPN) und eines Protokolls zur Sicherung der Datenübertragung aufgebaut. Ein Beispiel für das Sicherungsprotokoll ist z. B. das IPsec-Protokoll. Tunnelprotokolle sind dem Fachmann hinlänglich bekannt. Natürlich können auch andere existierende Protokolle oder auch zukünftige Protokolle im Rahmen der Erfindung angewandt werden.

Um Studiodaten als Videodatenstrom übertragen zu können, kann ein Protokoll zur kontinuierlichen Übertragung von Videosignalen, insbesondere das Real-Time-Transport-Protokoll (RTP), verwendet werden. Die Komprimierung des zu übertragenden Videodatenstroms erfolgt gemäß einem MPEG-Standard. Vorzugsweise werden MPEG-2- oder MPEG-4-Kodierer in Abhängigkeit der verfügbaren Anschluss-Bandbreite eingesetzt.

Um nicht nur Bildsignale, sondern auch Audiosignale kostengünstig und zeiteffizient übertragen zu können, werden Audiodaten in einen komprimierten Audiodatenstrom kodiert. Der komprimierte Audiodatenstrom wird über den aufgebauten VPN-Tunnel zur Empfangseinrichtung übertragen. Der empfangene Audiodatenstrom wird dekodiert und für das erste Wiedergabegerät und/oder ein anderes Wiedergabegerät bereitgestellt.

Das oben genannte technische Problem wird ebenfalls durch ein Datenübertragungssystem zur Live-Übertragung von Video-und/oder Audiodaten gelöst.

Das Datenübertragungssystem weist ein unsicheres öffentliches IP-basiertes Netz auf. Ferner ist wenigstens eine Videokamera zur Aufzeichnung und Übertragung einer Live-Übertragung vorgesehen. Weiterhin ist eine erste Empfangseinrichtung einem Empfangsort zugeordnet. Bei einem besonderen Ausführungsbeispiel ist die Empfangseinrichtung am Aufzeichnungsort eines Sportereignisses aufgebaut.

Am Empfangsort ist weiterhin ein Wiedergabegerät zur Wiedergabe der von der Videokamera gelieferten Signale aufgestellt. Eine zweite, einer Sendeanstalt zugeordneten Empfangseinrichtung dient dem Empfangen der von der Videokamera gelieferten Signale. Bei den Signalen kann es sich um Video- und/oder Audiosignale handeln. Der Sendeanstalt ist weiterhin eine Sicherheitseinrichtung zum Aufbauen eines gesicherten VPN-Tunnels zu der ersten Empfangseinrichtung über das unsichere IP-basierte Netz zugeordnet. Bei der Sicherheitseinrichtung kann es sich um eine Firewall mit einer VPN-Funktionalität handeln. Weiterhin ist der Sendeanstalt eine Erzeugungseinrichtung zum Erzeugen eines Programmsignals aus den von der Videokamera gelieferten Signalen zugeordnet. Darüber hinaus ist der Sendeanstalt eine Kodiereinrichtung zum Kodieren des Programmsignals in einen komprimierten Videodatenstrom sowie eine Sendeeinrichtung zum Übertragen des komprimierten Videodatenstroms über den VPN-Tunnel zur ersten Empfangseinrichtung zugeordnet. Die erste, am Empfangsort aufgestellte Empfangseinrichtung weist eine WAN (Wire Area Network)-Schnittstelle zum Verbinden der ersten Empfangseinrichtung mit dem IP-basierten Netz auf. Hierzu ist die erste Empfangseinrichtung beispielsweise an eine DSL-Leitung angeschlossen. Ferner ist eine Sicherheitseinrichtung zum Herstellen eines gesicherten VPN-Tunnels über das unsichere IP-basierte Netz zu der der Sendeanstalt zugeordneten Sicherheitseinrichtung vorgesehen. Eine Koppeleinrichtung ist mit einer Verarbeitungseinrichtung zum Dekodieren des empfangenen Videodatenstroms verbunden. Eine Multimedia-Schnittstelle ist mit der Verarbeitungseinrichtung verbunden, an die ein Wiedergabegerät oder ein zusätzliches Wiedergabegerät angeschaltet werden kann. Die Multimedia-Schnittstelle weist wenigstens einen TV-Anschluss auf.

In vorteilhafter Weise ist die Erzeugungseinrichtung zum Erzeugen eines Programmsignals gemäß dem SDI-Standard ausgebildet.

Um die Sicherheitsanforderung bei der Übertragung von Videodatenströmen zu erhöhen, ist der Sendeanstalt eine Verschlüsselungseinrichtung zum Verschlüsseln des zu übertragenen Videodatenstroms zugeordnet. In der ersten Empfangseinrichtung ist hierzu komplementär eine Verschlüsselungseinrichtung zum Entschlüsseln des empfangenen Videodatenstroms implementiert.

Gemäß einem bevorzugten Ausführungsbeispiel ist der Empfangsort ein Übertragungswagen.

Das oben genannte technische Problem wird ebenfalls durch eine Empfangsvorrichtung gelöst, die insbesondere zum Einsatz in dem oben umschriebenen Datenübertragungssystem geeignet ist. Die Empfangsvorrichtung ist insbesondere zur Implementierung in einem Übertragungswagen ausgebildet.

Die Empfangsvorrichtung weist eine WAN-Schnittstelle zum Verbinden der ersten Empfangseinrichtung mit einem unsicheren öffentlichen IP-basierten Netz, insbesondere dem Internet auf. Ferner ist eine Sicherheitseinrichtung zum Empfangen und Verarbeiten von Videodatenströmen, die über einen gesicherten VPN-Tunnel durch das IP-basierte Netz übertragen werden, vorgesehen. Die Sicherheitseinrichtung weist hierzu eine Firewall- und VPN-Funktionalität auf. Eine Verarbeitungseinrichtung dient zum Dekodieren des empfangenen Videodatenstroms, wobei die Verarbeitungseinrichtung zum Ausgeben eines analogen und/oder digitalen Videosignals ausgebildet ist. Die Verarbeitungseinrichtung ist mit einer Multimedia-Schnittstelle verbunden, an die ein Wiedergabegerät angeschaltet werden kann. Wie bereits erwähnt, enthält die Multimedia-Schnittstelle wenigstens einen TV-Anschluss.

Sofern die WAN-Schnittstelle zum Anschließen der Empfangsvorrichtung an einen DSL-Anschluss ausgebildet ist, ist ein DSL-Modem mit der WAN-Schnittstelle verbunden. An dieser Stelle sei bereits darauf hingewiesen, dass der Netzanbieter nicht nur eine DSL-Leitung zum Anschalten der Empfangsvorrichtung vorsehen kann. Alternativ oder zusätzlich können Maßnahmen bereitgestellt sein, mit denen der Empfangsvorrichtung unmittelbar Ethernet-basierte Video- und/oder Audiodaten zugeführt werden können. In diesem Fall kann auf ein DSL-Modem, welches empfangene Videodaten in Ethernet-basierte Daten umsetzt, verzichtet werden.

Werden über eine Teilnehmeranschlussleitung, an die die Empfangsvorrichtung angeschlossen ist, Breitband- und Schmalbanddienste angeboten, so kann der Empfangsvorrichtung ein DSL-Splitter vorgeschaltet sein.
Alternativ kann der DSL-Splitter auch integraler Bestandteil der Empfangsvorrichtung sein.

Um nicht nur eine gesicherte Video- und/oder Audiodatenübertragung zur Empfangsvorrichtung zu ermöglichen, sondern einem Benutzer auch einen schnellen ungesicherten Internetzugang zur Verfügung stellen zu können, weist die Empfangsvorrichtung wenigstens eine erste LAN-Schnittstelle auf, die zum Austauschen ungesicherter Informationen über das öffentliche IP-Netz vorgesehen ist. An die erste LAN-Schnittstelle kann beispielsweise ein Personalcomputer oder ein Notebook angeschlossen werden. Ferner ist eine erste steuerbare Koppeleinrichtung zum gesteuerten Verbinden der WAN-Schnittstelle mit der wenigstens eine LAN-Schnittstelle und der Sicherheitseinrichtung ausgebildet ist. Die erste steuerbare Koppeleinrichtung und gegebenenfalls das DSL-Modem können als eine Baueinheit ausgeführt sein.

Um die Flexibilität der Empfangsvorrichtung zu verbessern, ist eine zweite steuerbare Koppeleinrichtung vorgesehen, die gesicherte Informationen einer zweiten LAN-Schnittstelle und den empfangenen gesicherten Videodatenstrom der Verarbeitungseinrichtung zuführen kann. Auf diese Weise wird dem Nutzer der Empfangsvorrichtung zusätzlich die Möglichkeit geschaffen, Informationen in gesicherter Weise mit der Sendeeinrichtung der Sendeanstalt austauschen zu können. Hierzu kann an die zweite LAN-Schnittstelle ein Notebook angeschlossen werden. In diesem Fall werden die zu übertragenden Informationen zusammen mit oder zeitlich versetzt zu den Videodatenströmen über den aufgebauten gesicherten VPN-Tunnel übertragen.

Die Verarbeitungseinrichtung kann gemäß einer bevorzugten Ausführungsform im Wesentlichen die Funktionalitäten einer herkömmlichen Set-Top-Box enthalten. Die Empfangsvorrichtung verfügt beispielsweise über eine drahtlose Schnittstelle und/oder ein von außen zugängliches Tastenfeld zur Ansteuerung und Programmierung der Verarbeitungseinrichtung.

Die Empfangsvorrichtung kann über einen der Sicherheitseinrichtung zugeordneten Kartenleser und/oder einen der Verarbeitungseinrichtung zugeordneten Kartenleser verfügen. Der der Verarbeitunngseinrichtung zugeordnete Kartenleser kann ein USB-Kartenleser sein, der zusätzliche Informationsquellen für die Verarbeitungseinrichtung bereitstellen kann. Über den der Sicherheitseinrichtung zugeordneten Kartenleser kann die Authentifizierung des VPN-Tunnels automatisch durchgeführt werden.

Dank des vorgeschlagenen Verfahrens und Datenübertragungssystems ist es möglich, Video- und/oder Audiosignale nahezu in Echtzeit, d. h. mit Verzögerungszeiten von weniger als 0,5 Sekunden, zu übertragen. Ferner werden nunmehr auch Mediendatenströme dank einer gesicherten Übertragungstechnik gegen unerlaubten Zugriff geschützt.

Eine ausreichenden Signalqualität kann bereits bei Verwendung herkömmlicher DSL-Anschlüsse, beispielsweise einem DSL 3000-Anschluss gewährleistet werden. Da zur gesicherten Übertragung der-Videodatenströme das Internet verwendet wird, ist ein weltweiter Einsatz des Verfahrens und des Datenübertragungssystem möglich. Durch die Bereitstellung zusätzlicher LAN-Schnittstellen ist es ferner möglich, auch aus einem Übertragungswagen heraus einen schnellen Zugang zum Internet, und zwar Übertragung sicherer und unsicherer Daten zu erhalten.

Die Erfindung wird nachfolgend anhand eines Ausführungsbeispiels in Verbindung mit den beiliegenden Zeichnungen näher erläutert. Es zeigen:
- Fig. 1: ein beispielhaftes Datenübertragungssystem gemäß der Erfindung, welches bei einer Fußball-Live- Übertragung verwendet werden kann, und
- Fig. 2: ein schematisches Blockschaltbild der in Fig. 1 gezeigten Empfangsvorrichtung, die in einem Übertragungswagen installiert ist.

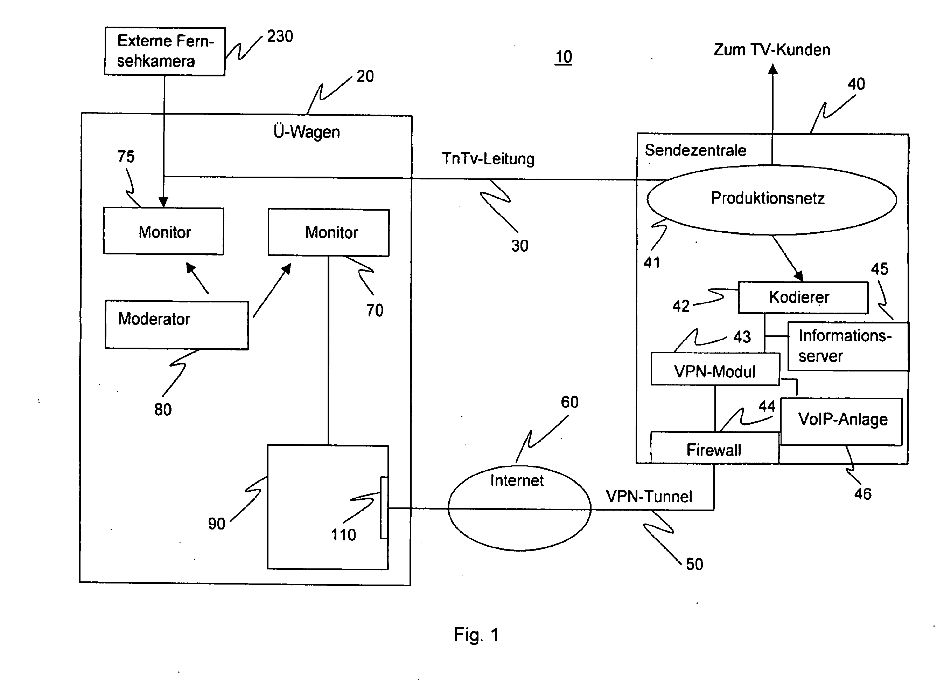

Fig. 1 zeigt ein beispielhaftes Datenübertragungssystem 10, welches zum Beispiel bei der Live-Übertragung einer Sportveranstaltung zum Einsatz kommen kann. Das Datenübertragungssystem 10 weist wenigstens eine externe Fernsehkamera 230 auf, die in einem Stadion aufgestellt sein kann und die von der Sportveranstaltung aufgezeichneten Bilder zum Beispiel an einen Übertragungswagen 20 liefert. Der Übertragungswagen 20 verfügt über eine nicht dargestellte Sendeeinrichtung, die die aufgezeichneten, "ungeschminkten" Bilder zu einem Monitor 75, beispielsweise einen TV-Empfänger, und beispielsweise über eine Rundfunkleitung 30 zu einer Empfangseinrichtung (nicht dargestellt) einer Sendezentrale 40 überträgt. Die Empfangseinrichtung der Sendezentrale 40 kann Bestandteil eines Produktionsnetzes 41 sein. Ein solches Produktionsnetz umfasst die gesamte fernsehtechnische Herstellungsumgebung einschließlich der Sendeabwicklung.

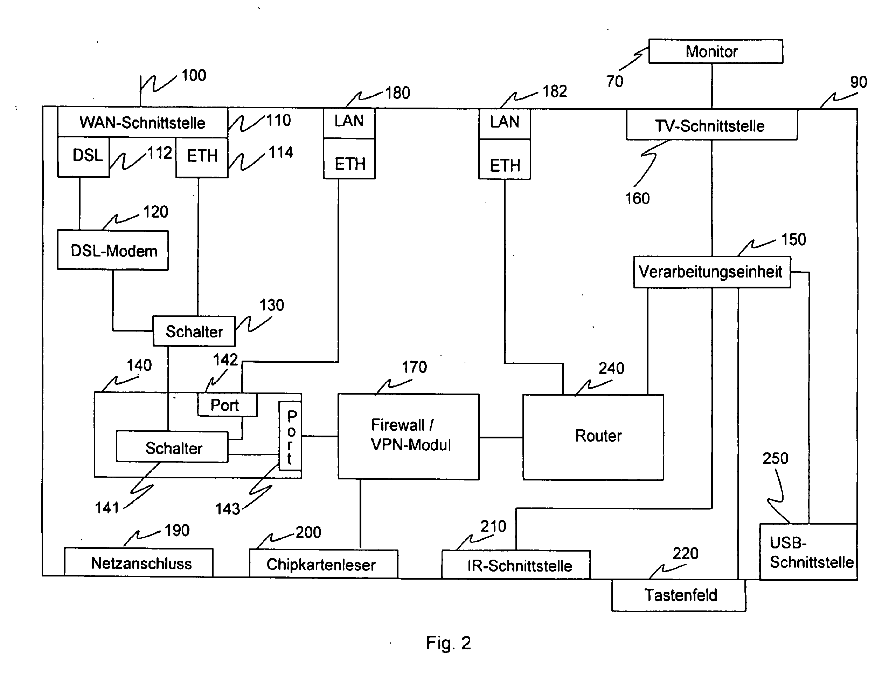

Im Übertragungswagen 20 ist ferner ein zweiter Monitor 70, beispielsweise ein TV-Empfänger, vorgesehen, an dem, wie unten noch näher ausgeführt wird, das von der Sendezentrale erzeugte Programmsignal dargestellt wird. Der Monitor 70 ist an eine Empfangseinrichtung 90, die im Übertragungswagen 20 aufgestellt ist, angeschlossen. Angemerkt sei an dieser Stelle, dass die beiden Monitore 70 und 75 nicht im Übertragungswagen 20, sondern statt dessen an einem Kommentatorenplatz im Stadion aufgestellt sein können. Auch die Empfangseinrichtung 90 muss nicht im Übertragungswagen 20 installiert sein. Die Empfangseinrichtung 90 weist eine WAN-Schnittstelle 110 auf, an die eine DSL-Leitung 100 angeschlossen sein kann, wie in Fig. 2 gezeigt. In diesem Fall die Empfangseinrichtung 90 über die DSL-Leitung 100 mit einem IP-basierten öffentlichen Netz 60 verbunden. Bei dem IP-basierten Netz 60 handelt es sich vorzugsweise um das Internet. In der Sendezentrale 40 ist wenigstens ein Kodierer 42 angeordnet, der die von der Sendeanstalt erzeugten Programmsignale in komprimierte Videodatenströme kodiert. Der Kodierer 42 kann beispielsweise eine MPEG2 Kodierer sein. Erwähnt sei an dieser Stelle, dass es sich bei dem Kodierer 42 um einen Kodierer zur Erzeugung von MPEG-2-Datenströmen handeln kann. Weiterhin sei angemerkt, dass die Kodiereinrichtung 42 weiterhin dazu ausgebildet sein kann, die komprimierten Videodatenströme in zielgerichtete Videodatenströme, beispielsweise in UDP (User Datagram Protocol)-Datenströme umzuwandeln. Zielgerichtet heißt in diesem Fall, dass die Videodatenströme an die Empfangseinrichtung 90 des Übertragungswagens 20 adressiert sind.

In der Sendezentrale 40 ist weiterhin eine Sicherheitseinrichtung aufgestellt, die ein VPN-Modul 43 und eine Firewall 44 aufweist. Die Sicherheitseinrichtung 43, 44 wird unter Anderem dazu verwendet, einen sicheren VPN-Tunnel 50, der als Rückkanal von der Sendezentrale 40 zum Übertragungswagen 20 dient, über das Internet 60 aufzubauen. Bei der Sicherheitseinrichtung 43 und 44 kann es sich um eine Firewall PIX 515 E der Firma Cisco handeln. Ein derartiges Bauteil bietet Ports sowohl für eine Fast-Ethernet-Firewall-Funktion als auch eine VPN-Funktionalität.

In der Sendezentrale 40 werden die von der Fernsehkamera 230 gelieferten Livebilder in an sich bekannter Weise zu dem eigentlichen Programm verarbeitet, indem beispielsweise zusätzliche Informationen, etwa Einblendungen zu den Spielständen, vorbereitete Grafiken zu Mannschaftsaufstellungen, Statistiken und Logos eingefügt werden. In der Regel werden die kompletten Programmsignale, welche Ton und Bildsignale enthalten können, zur Erdfunkstelle der Deutschen Telekom in Usingen übermittelt. Von dort werden die Programinsignale in ein Fernsehnetz eingespeist.

Um einem Moderator oder Sportreporter 80 die Möglichkeit zu geben, nahezu in Echtzeit das von der Sendezentrale 40 abgestrahlte Programm zusammen mit dem auf dem Monitor 75 dargestellten Livebildern betrachten zu können, werden die aufbereiteten Videosignale über den gesicherten VPN-Tunnel 50 über das Internet 60 zurück zum Übertragungswagen 20 übertragen. Die Empfangseinrichtung 90 sorgt dann dafür, dass die empfangenen Videodatenströme am Monitor 70 dargestellt werden können. Der Sportreporter kann nun seinen Kommentar auf die Bildinformation abstimmen, die auch der Zuschauer während der Live-Übertragung sieht.

Angemerkt sei an dieser Stelle, dass die das VPN-Modul 43 und die Firewall 44 enthaltende Sicherheitseinrichtung ein VPN-Protokoll zum Aufbau eines virtuellen Netzwerkes anwenden kann, um den VPN-Tunnel 50 zur Empfangseinrichtung 90 aufzubauen. Zur Sicherung des VPN-Tunnels 50 kann die Sicherheitseinrichtung 43, 44 beispielsweise das IPsec-Protokoll benutzen.

Die in Fig. 1 gezeigte Empfangseinrichtung ist in Fig. 2 detaillierter dargestellt.

Die Empfangseinrichtung 90 weist eine WAN (Wide Area Network)-Schnittstelle auf, über die die Empfangseinrichtung an einen DSL-Anschluss angeschlossen werden kann. Dem DSL-Anschluss ist eine feste IP-Adresse zugeordnet, die der Sendezentrale 40 ebenfalls bekannt ist. Die WAN-Schnittstelle 110 kann als Ethernet-Schnittstelle 114 ausgebildet. Für den Fall, dass die Empfangseinrichtung 90 über eine herkömmliche DSL-Leitung mit dem Internet 60 verbunden ist, weist die WAN-Schnittstelle eine DSL-Einheit 112 auf, der ein DSL-Modem 120 zugeordnet ist, welche die von der WAN-Schnittstelle 110 kommenden Daten in Ethernet-basierte Daten umwandelt und in umgekehrter Richtung die von der Empfangseinrichtung 90 zu übertragenden Daten in entsprechende DSL-kodierte Daten umsetzt. Die Funktionsweise eines DSL-Modem ist allgemein bekannt.

Für den Fall, dass über die Teilnehmeranschlussleitung 100 sowohl schmalbandige als auch breitbandige Dienste übertragen werden, ist zwischen der WAN-Schnittstelle 110 und dem DSL-Modem 120 ein an sich bekannter DSL-Splitter (nicht dargestellt) geschaltet. Alternativ kann ein derartiger DSL-Splitter auch extern vor die Empfangseinrichtung 90 geschaltet werden. Der DSL-Splitter hat die Aufgabe, schmalbandige und breitbandige Dienste zu trennen, so dass nur die breitbandigen Dienste dem DSL-Modem 120, das sind im vorliegenden Fall beispielsweise die Video- und/oder Audiodatenströme, zugeführt werden. Gemäß einer weiteren Ausbildungsform können über die Teilnehmeranschlussleitung 100 bereits Ethernet-basierte Daten der WAN-Schnittstelle 110 zugeführt werden. Diese Daten werden über die Ethernet-Komponente 114 der WAN-Schnittstelle 110 ohne Zwischenschaltung eines DSL-Modems einem Router 140 zugeführt. Angemerkt sei an dieser Stelle, dass der Router 140 eine an sich bekannte IAD (Integrated Access Device)-Funktionalität einschließlich einer Firewall aufweisen kann. Diese Firewall schützt die Kommunikation über den LAN-Schnittstelle 180. In diesem Zusammenhang sei angemerkt, dass die Firewall des Firewall/VPN-Moduls 170 eine Kommunikation über die LAN-Schnittstelle 182 schützt.

Um an der WAN-Schnittstelle sowohl Ethernet-basierte Daten als auch DSL-Daten verarbeiten zu können, ist ein Schalter 130 mit dem DSL-Modem 120 und der Ethernet-Komponente 114 der WAN-Schnittstelle 110 verbunden. Die von der WAN-Schnittstelle 110 kommenden breitbandigen Daten werden dem Router 140 zugeführt. Der Router 140 weist einen Schalter auf, der beispielsweise einen Ethernet-Switch 141 darstellt. Der Ethernet-Switch 141 bildet zum Beispiel zwei virtuelle LANs auf einen Port 142 bzw. auf einen Port 143 ab. Aufgabe des Ethernet-Switches 141 ist es, die von der Sendezentrale 40 über das Internet 60 übertragenen nicht gesicherten Daten zum Port 142 und von dort zu einer LAN-Ethernet-Schnittstelle 180 weiterzuleiten. An die Ethernet-Schnittstelle 180 kann beispielsweise ein Personalcomputer angeschlossen werden. Mittels der Ethernet-Schnittstelle 180 wird dem Moderator 80 ein breitbandiger Internet-Anschluss über die Empfangseinrichtung 90 angeboten.

Die von der Sendezentrale 40 über den aufgebauten VPN-Tunnel 50 übertragenen gesicherten Datenströme werden vom Ethernet-Switch dem Port 143 zugeführt, der ausschließlich für die geschützte Datenstromkommunikation über den geschützten VPN-Tunnel genutzt wird. Gemäß einer bevorzugten Ausführungsform wird dem Port 143 eine höhere Priorität als dem Port 142 zugeordnet, so dass die kritische gesicherte Videodatenstromübertragung nicht durch eine herkömmliche Internet-Aktivität beeinträchtigt wird. Der Port 143 ist mit einer Sicherheitseinrichtung 170 verbunden, welche eine Firewall- und VPN-Funktionalität aufweist. Die Sicherheitseinrichtung 170 arbeitet mit der Sicherheitseinrichtung 43, 44 der Sendezentrale zusammen, um einen, beispielsweise durch IPsec geschützten VPN-Tunnel über das Internet 60 aufzubauen. Die Sicherheitseinrichtung 170 kann ähnliche Funktionen wie die Firewall PIX 506 E der Firma Cisco bereitstellen.

Um eine bestmögliche Sicherheit für Hochgeschwindigkeits-Internet-Verbindungen zu gewährleisten, bietet die Sicherheitseinrichtung 170, wenn sie als Firewall verwendet wird, einen Datendurchsatz von beispielsweise 100 Mbps und bei einer Kommunikation über einen geschützten VPN-Tunnel einen Datendurchsatz von beispielsweise 16 Mbps. Die Sicherheitseinrichtung 170 ist mit einem Router 240 verbunden, der über den gesicherten VPN-Tunnel 50 übertragene Informationen einer LAN-Ethernet-Schnittstelle 182 zuführt. An die LAN-Ethernet-Schnittstelle 182 kann wiederum ein Personalcomputer oder ein Notebook angeschlossen sein, über den der Moderator 80 sicherheitsrelevante Daten von der Empfangseinrichtung 90 über den gesicherten VPN-Tunnel 50 zur Sendezentrale oder einer anderen Einrichtung übertragen kann. In diesem Fall ist die Empfangseinrichtung 90 in Verbindung mit der Sicherheitseinrichtung 170 in der Lage, mit einer beliebigen, am Internet 60 angeschalteten Einrichtung über einen VPN-Tunnel zu kommunizieren, sofern die andere Stelle den Aufbau eines VPN-Tunnels unterstützt.

Die von der Sendezentrale 40 übertragenen gesicherten Video- und/oder Audiodatenströme werden vom Router 240 einer Verarbeitungseinrichtung 150 zugeführt, die komprimierte und gesicherte Video- und/oder Audiodaten dekodiert und als analoge und/oder digitale Videosignale einer Multimedia-Schnittstelle 160 zuführt. Im vorliegenden Beispiel arbeitet die Verarbeitungseinrichtung 150 wie eine an sich bekannte Set-Top-Box. Die Verarbeitungseinrichtung 150 weist unter Anderem eine Dekodiereinrichtung zum dekodieren der MPEG-kodierten Videodatenströme auf.

Die Multimedia-Schnittstelle 160 enthält zumindest einen Videoanschluss und stellt beispielsweise Abgriffe für FBAS, S-Video, HDMI sowie erforderliche Audio-Ausgänge zur Verfügung. An die Multimedia-Schnittstelle 160 kann beispielsweise der Monitor 70 angeschlossen werden. Beispielsweise sind in der Verarbeitungseinrichtung 150 die Funktionen einer Stino-Set-Top-Box S-Box 6200 implementiert.

Die Authentifizierung des VPN-Tunnels 50 kann durch manuelle Konfiguration oder optional durch einen Chip-Kartenleser 200 durchgeführt werden. Alle für die Authentifizierung erforderlichen Daten stehen beispielsweise auf einer SIM- Karte, die in den Chip-Kartenleser 200 eingeführt wird, zur Verfügung. Der Chip-Kartenleser 200 ist demzufolge mit der Sicherheitseinrichtung 170 verbunden. Die Bedienung der Verarbeitungseinrichtung 150 kann über eine Fernbedienung, die an einer drahtlosen Schnittstelle 210, beispielsweise einer Infrarot-Schnittstelle, angeschlossen ist, oder durch ein externes Tastenfeld 220 erfolgen. Ein USB-Anschluss 250 ist vorgesehen, um zusätzliche Informationsquellen anschließen zu können. Beispielsweise kann eine weitere Festplatte (nicht dargestellt) angeschlossen werden, um den Speicherbereich der Verarbeitungseinrichtung 150 zu erweitern. Über den mit 190 bezeichneten Netzanschluss kann die Empfangseinrichtung 90 an ein Energieversorgungsnetz angeschlossen werden.

In der Sendezentrale 40 können ferner wenigstens eine Datenbank (nicht dargestellt) und ein Informationsserver 45, insbesondere Web-/Service-Server aufgestellt sein. Der Informationsserver 45 ist dazu ausgebildet, die Empfangseinrichtung 90 oder ein an die LAN-Schnittstelle 180 und/ 182 angeschlossenes Endgerät (nicht dargestellt) zu authentifizieren und einen Zugriff auf bestimmte Informationen, die in der Datenbank abgelegt sind, zu gewähren. Bei den Informationen kann es sich um Dienstinformationen und/oder aktuelle Daten der Sendezentrale handeln. Der Moderator oder Kommentator 80 kann dann mittels des an der Empfangseinrichtung 90 angeschlossenen Endgerätes diese Informationen abfragen oder Befehle und Informationen zum Informationsserver 45 übertragen. Ist das Endgerät an der LAN-Schnittstelle 182 angeschlossen, werden die Daten über den aufgebauten VPN-Tunnel 50 übertragen. Der Informationsserver 45 kann für jede Empfangseinrichtung eine Benutzeroberfläche bereithalten. An dieser Stelle sei noch erwähnt, dass gleichzeitig auch mehrere Empfangseinrichtungen jeweils über einen separaten VPN-Tunnel mit der Sendezentrale verbunden sein können.

Sofern an der Empfangseinrichtung 90 ein VoIP-taugliches Endgerät (nicht dargestellt) angeschlossen ist und in der Sendezentrale eine VoIP-Anlage 46 oder wenigstens ein VoIP-taugliches.Endgerät vorhanden ist, VoIP-Informationen als Audiodatenströme bidirektional über das Internet 60 übertragen werden. Ist das VoIP-taugliche Endgerät an der LAN-Schnittstelle 182 der Empfangseinrichtung 90 angeschlossen, können die VoIP-Informationen auch über den gesicherten VPN-Tunnel 50 übertragen werden.

Nachfolgend wird die Funktionsweise des in Fig. 1 dargestellten Datenübertragungssystems 10 näher erläutert.

Angenommen sei, dass eine Sportveranstaltung, beispielsweise ein Fußballspiel live übertragen werden soll. Bei der in Fig. 1 dargestellten Fernsehkamera 230 handelt es sich lediglich um ein Beispiel einer Vielzahl von Fernsehkameras, die in einem Stadion aufgestellt sind. Das von der Fernsehkamera 230 aufgezeichnete TV-Bild wird zunächst zum Übertragungswagen 20 und von dort als sogenanntes "Clean Feed" über die TV-Rundfunkleitung 30 zur Sendezentrale 40 übertragen. Mit Hilfe des Produktionsnetzes 41 werden unter anderem Logos, Graphikeinblendungen, Tabellen und Spielstände in die empfangenen Live-Bilder eingefügt. Dieses zusammengesetzte Signal, auch Studio- oder Programmsignal genannt, ist letztlich das Signal, welches der Zuschauer zu Hause sieht. Wie in Fig. 1 gezeigt, wird das Programmsignal von der Sendezentrale 40 in an sich bekannter Weise über einen Kabel- oder Satellitenkanal zum Zuschauer gebracht. Das von der externen Fernsehkamera 230 aufgezeichnete Sportereignis wird ebenfalls über den Monitor 75 dem Kommentator 80 gezeigt. Wie bereits erwähnt, kann, wie in Fig. 1 gezeigt, der Monitor 75 im Übertragungswagen 20 selbst oder am Kommentatorenplatz im Stadion aufgestellt sein. Ohne eine Rückübertragung des in der Sendezentrale erzeugten Programmsignals hätte der Kommentator nicht die Möglichkeit, das zum TV-Kunden abgestrahlte Programmsignal zu sehen. Dies ist jedoch eine Grundvoraussetzung für eine gute und genaue Abwicklung einer Fernseh-Live-Produktion.

Das von der Sendezentrale 40 bereitgestellte Programmsignal, welches beispielsweise als SDI-Studiosignal vorliegt, wird vom Produktionsnetz dem Kodierer 42 zugeführt. Bei dem Kodierer 42 kann es sich um einen MPEG2 oder beispielsweise auch um einen MPEG4/AVC Kodierer handeln. Der Kodierer 42 erzeugt aus dem SDI-Studiösignal einen Videodatenstrom mit einer Bitrate von ca. 2,5 Mbit/s, sofern es sich um einen MPEG-2-Encoder handelt. Der Videodatenstrom liegt als zielgerichteter RTP-Videodatenstrom, beispielsweise gemäß dem UDP-Protokoll vor. Der Videodatenstrom wird dann über die Sicherheitseinrichtung 43, 44 und den gesicherten VPN-Tunnel 50 zur Empfangseinrichtung 90 übertragen. Die Art und Weise, wie der gesicherte VPN-Tunnel 50 zwischen der Sicherheitseinrichtung der Sendezentrale und der Sicherheitseinrichtung 170 der Empfängereinrichtung 90 aufgebaut wird, ist allgemein bekannt. Zur Sicherung des VPN-Tunnels 50 wird beispielsweise das IPsec-Protokoll verwendet. Der Videodatenstrom wird dann beispielsweise als UDP-Datenstrom in IP-Paketen über den IPsec-gesicherten VPN-Tunnel 50 durch das Internet 60 zum Übertragungswagen 20 übertragen. Der von der Sendezentrale erzeugte Videodatenstrom kann vor der Übertragung zum Übetragungswagen 20 zusätzlich auch noch mittels eines bekannten Verschlüsselungs-Algorithmus verschlüsselt werden. In diesem Fall ist eine entsprechende Verschlüsselungseinrichtung in der Sendezentrale angeordnet. In entsprechender Weise ist in der Empfangseinrichtung 90 eine Entschlüsselungseinrichtung vorzusehen, um den verschlüsselten Videodatenstrom wieder entschlüsseln zu können. Der über die Anschlussleitung 100 der WAN-Schnittstelle 110 zugeführte Videodatenstrom wird über die DSL-Einheit 112 der WAN-Schnittstelle dem DSL-Modem 120 zugeführt. Die am Ausgang des DSL-Modems 120 vorliegenden Ethernet-basierten Daten werden über den Schalter 130 dem Ethernet-Switch 141 an den Eingang des Routers 140 angelegt. Der Router 140 erkennt anhand einer speziellen Signalisierung im Videodatenstrom, dass es sich bei den empfangenen Videodaten um den gesicherten Videodatenstrom handelt. Demzufolge schaltet der Ethernet-Switch 141 den Videodatenstrom zum Port 143 durch. Der Router 240 erkennt wiederum, dass der empfangene Datenstrom der gesicherte übertragene Videodatenstrom ist und leitet diesen zur Verarbeitungseinrichtung 150, die im Wesentlichen die Funktionen einer Set-Top-Box ausführt. Die Verarbeitungseinrichtung 150 liefert ein analoges oder digitales Videosignal an die Multimedia-Schnittstelle 160. Das Videosignal wird schließlich dem Monitor 70 zugeführt und dort als das Programm dargestellt, welches auch der Zuschauer sieht. Dank der Maßnahme, dass als Rückkanal ein durch das unsichere Internet 60 geführter gesicherter VPN-Tunnel verwendet wird, stehen dem Kommentator 80 sowohl die live aus dem Stadion übertragenen Bilder, die auf dem Monitor 75 dargestellt werden, als auch das tatsächlich dem Zuschauer gelieferte Programm am Monitor 70 nahezu in Echtzeit zur Verfügung.

Die VPN-Sicherung basiert beispielsweise auf einer Verschlüsselungstechnologie der Firma Cisco, wobei symmetrische und asymmetrische Verschlüsselungssysteme zum Einsatz kommen können. Da symmetrische und asymmetrische Verschlüsselungssysteme allgemein bekannt sind, wird auf eine eingehende Erläuterung verzichtet.

Anzumerken ist ferner, dass über den gesicherten VPN-Tunnel 50 neben den Videodatenströmen zusätzliche, gesicherte Informationen zum Übertragungswagen 20 übertragen werden können. Anhand einer speziellen Kennung, die den zusätzlichen, gesicherten Informationen zugeordnet ist, erkennt der Router 240 der Empfangseinrichtung 90, dass diese gesicherten Daten über die LAN-Schnittstelle 182 ausgegeben werden sollen.

Neben der gesicherten Datenübertragung über den aufgebauten VPN-Tunnel 50 kann der Moderator unter Verwendung der LAN-Schnittstelle 180 auch eine übliche Internet-Verbindung für die Datenübertragung zur Sendezentrale 40 oder zu einem anderen Internet-Teilnehmer verwenden. Anzumerken ist, dass sowohl an der LAN-Schnittstelle 180 als auch an der LAN Schnittstelle 182 ein komplettes lokales Netzwerk angeschlossen sein kann, welches im Übertragungswagen 20 implementiert ist. Dank der Verwendung eines über das Internet 60 aufgebauten gesicherten Rückkanals ist das vorgeschlagene Datenübertragungssystem weltweit einsetzbar.

## Patentansprüche

1. Verfahren zum gesicherten Übertragen von Video- und/oder Audiodaten über ein unsicheres öffentliches IP-basiertes Netz (60), nach dem
a) von einer Aufnahmeeinrichtung (230) erzeugte Videosignale zu einer Sandeanstalt (40) und -zusätzlich zu einem ersten Wiedergabegerät (70) oder zu einem zweiten Wiedergabegerät (75), welche einem Empfangsort zugeordnet sind, übertragen werden;
b) ein gesicherter VPN-Tunnel (50) zwischen der Sendeanstalt (40) und einer dem Empfangsort zugeordneten Empfangseinrichtung (90) über das unsichere IP-basierte Netz (60) aufgebaut wird;
c) die Videosignale in der Sendeanstalt (40) in einen komprimierten Videodatenstrom kodiert werden;
d) der komprimierte Videodatenstrom über den VPN-Tunnel (50) zur Empfangseinrichtung (90) übertragen wird; und
e) der empfangene Videodatenstrom dekodiert und für das erste Wiedergabegerät (70) bereitgestellt wird.

2. Datenübertragungssystem (10) zur Live-Übertragung von Mediendatenströmen, mit
einem unsicheren öffentlichen IP-basierten Netz (60), wenigstens einer ersten, einem Empfangsort zugeordneten Empfangseinrichtung (90),
wenigstens einer Videokamera (230) mit Mitteln, um die von der Videokamera erzeugten Signale zu
wenigstens einem dem Empfangsort zugeordneten Wiedergabegerät (75) zur Wiedergabe der von der Videokamera gelieferten Signale, und zu einer zweiten, einer Sendeanstalt (40) zugeordneten Empfangseinrichtung zum Empfangen der von der Videokamera (230) gelieferten Signale zu übertragen , und der
Sendeanstalt (40) mit folgenden Einrichtungen :
einer Sicherheitseinrichtung (43, 44) zum Aufbauen eines gesicherten VPN-Tunnels (50) zu der ersten Empfangseinrichtung (90) über das unsichere IP-basierte Netz (60), wobei der VPN-Tunnel als Rückkanal fungiert,
einer Erzeugungseinrichtung (41) zum Erzeugen eines Programmsignals aus den von der Videokamera (230) gelieferten Signalen,
einer Kodiereinrichtung (42) zum Kodieren des Programmsignals in einen komprimierten Videodatenstrom, und einer Sendeeinrichtung zum Übertragen des komprimierten Videodatenstrom über den VPN-Tunnel (50) zur ersten Empfangseinrichtung (90); und wobei die erste Empfangseinrichtung (90) folgende Merkmale aufweist:
eine WAN-Schnittstelle (110) zum Verbinden der ersten Empfangseinrichtung mit dem IP-basierten Netz (60), eine Sicherheitseinrichtung (170) zum Herstellen eines gesicherter VPN-Tunnels (50) über das unsichere IP-basierte Netz (60) zu der der Sendeanstalt (40) zugeordneten Sicherheitseinrichtung (43, 44); eine erste steuerbare Koppeleinrichtung (240), die mit einer Verarbeitungseinrichtung (150) zum Dekodieren des empfangenen Videodatenstroms verbunden ist, und eine mit der Verarbeitungseinrichtung (150) verbundene TV-Schnittstelle (160) zum Anschalten des Wiedergabegeräts (75) oder eines zusätzlichen, dem Empfangsort zugeordneten Wiedergabegeräts (70), auf welchem der zurückgeführte Videodatenstrom darstellbar ist.

3. Datenübertragungssystem nach Anspruch 2,
**dadurch** gekenntzeichnet, dass
die Erzeugungseinrichtung (41) zum Erzeugen eines Programmsignals gemäß dem SDI (Serial Digital Interface)-Standard ausgebildet ist.

4. Datenübertragungssystem nach Anspruch 2 oder 3, **dadurch gekennzeichnet, dass** der Sendeanstalt (40) eine Verschlüsselungseinrichtung zum Verschlüsseln des zu übertragenden Videodatenstroms zugeordnet ist, und dass in der ersten Empfangseinrichtung (90) eine Entschlüsselungseinrichtung zum Entschlüsseln des empfangenen Videodatenstroms implementiert ist.

5. Datenübertragungssystem nach einem der Ansprüche 2 bis 4,
**dadurch gekennzeichnet, dass**
der Empfangsort ein Übertragungswagen (20) und das IP-basierte Netz (60) das Internet ist.

6. Datenübertragungssystem nach einem der Ansprüche 2 bis 5,
**dadurch gekennzeichnet, dass**
der Sendeanstalt (40) eine Datenbank und ein Server (45) zugeordnet ist, wobei der Server (45) zum Authentifizieren der Empfangseinrichtung (90) und/oder einem an der Empfangseinrichtung (90) angeschlossenen Endgerät und zum Gewähren eines Zugriffs auf vorbestimmte Informationen, die in der Datenbank abgelegt sind, ausgebildet ist.

7. Datenübertragungssystem nach einem der vorstehenden Ansprüche,
**dadurch** gekenntzeichnet, dass
die Sicherheitseinrichtung (170) der ersten Empfangseinrichtung (90) eine Firewall- und VPN-Funktionalität aufweist.

8. Datenübertragungssystem nach einem der vorstehenden Ansprüche,
**dadurch gekennzeichnet, dass**
die erste Koppeleinrichtung (240) derart ausgebildet ist, dass sie über den VPN-Tunnel übertragene gesicherten Informationen, einer ersten LAN-Schnittstelle (182) zuführen kann.

9. Datencbertragungssystem nach einem der vorstehenden Ansprüche,
**dadurch gekennzeichnet, dass**
die WAN-Schnittstelle (110) zum Anschließen der ersten Empfangseinrichtung (90) an einen DSL-Anschluss ausgebildet ist, und dass
die WAN-Schnittstelle (110) mit einem DSL-Modem (120) verbunden ist.

10. Datenübertragungssystem nach einem der vorstehenden Ansprüche,
**dadurch gekennzeichnet, dass**
die erste Empfangseinrichtung (90) einen DSL-Splitter aufweist.

11. Datenübertragungssysten nach einem der vorstehenden Ansprüche, **dadurch gekennzeichnet, dass**
die erste Empfangseinrichtung (90) wenigstens eine zweite LAN-Schnittstelle. (180) aufweist, die zum Austauschen ungesicherter Informationen über das öffentliche IP-Netz (60) vorgesehen ist, wobei eine zweite steuerbare Koppeleinrichtung (140) zum gesteuerten Verbinden der WAN-Schnittstelle (110) mit der wenigstens einen LAN-Schnittstelle (180) und der Sicherheitseinrichtung (170) ausgebildet ist.

12. Datenübertragungssystem nach einem der vorstehenden Ansprüche,
**dadurch gekennzeichnet, dass**
die erste Empfangseinrichtungg (90) eine drahtlose Schnittstelle (210) und/oder ein Tastenfeld (220) zur Ansteuerung der Verarbeitungseinrichtung (150) aufweist.

13. Datenübertragungssystem nach einem der vorstehenden Ansprüche,
**dadurch gekennzeichnet, dass**
die erste Empfangseinrichtung (90) einen der Sicherheitseinrichtung (170) zugeordneten Kartenleser (200) und/oder einen der Verarbeitungseinrichtung (150) zugeordneten USB-Anschluss (250) aufweist.

## Claims

1. Method for secure transmission of video and/or audio data over an insecure, public IP-based network (60), according to which
a) video signals produced by a recording device (230) are transmitted to a broadcaster (40) and additionally to a first playback device (70) or to a second playback device (75), which are associated with a receiving location;
b) a secured VPN tunnel (50) is set up between the broadcaster (40) and a receiving device (90) associated with the receiving location over the insecure IP-based network (60);
b) the video signals are encoded in a compressed video data stream at the broadcaster (40);
c) the compressed video data stream is transmitted over the VPN tunnel (50) to the receiving device (90); and
d) the received video data stream is decoded and provided to the first playback device (70).

2. Data transmission system (10) for the live transmission of media data streams, having
an insecure, public IP-based network (60),
at least one first receiving device (90) associated with a receiving location,
at least one video camera (230), wherein the signals produced by the video camera are transmitted to at least one playback device (75) associated with the receiving location for playback of the signals supplied by the video camera and to a second receiving device associated with a broadcaster (40) for receiving the signals supplied by the video camera (230),
wherein the following devices are associated with the broadcaster (40):
a security device (43, 44) for setting up a secured VPN tunnel (50) to the first receiving device (90) over the insecure IP-based network (60), wherein the VPN tunnel functions as a backward channel,
a generating device (41) for generating a program signal from the signals supplied by the video camera (230),
an encoding device (42) for encoding the program signal in a compressed video data stream, and
a transmitting device for transmitting the compressed video data stream through the VPN tunnel (50) to the first receiving device (90); and wherein the first receiving device (90) has the following features:
a WAN interface (110) for connecting the first receiving device to the IP-based network (60), a security device (170) for establishing a secured VPN tunnel (50) to the security device (43, 44) associated with the broadcaster (40) over the insecure IP-based network (60); a first, controllable coupling device (240), which is connected to a processing device (150) for decoding the received video data stream, and a TV interface (160) connected to the processing device (150) for the purpose of connecting the playback device (75) or an additional playback device (70) associated with the receiving location, on which playback device the returned video data stream can be displayed.

3. Data transmission system according to claim 2, **characterized in that**
the generating device (41) is designed to generate a program signal in accordance with the SDI (serial digital interface) standard.

4. Data transmission system according to claim 2 or 3, **characterized in that**
the broadcaster (40) has associated with it an encryption device for encrypting the video data stream that is to be transmitted, and **in that** a decryption device for decrypting the received video data stream is implemented in the first receiving device (90).

5. Data transmission system according to any one of claims 2 through 4,
**characterized in that**
the receiving location is an outside broadcasting van (20), and the IP-based network (60) is the Internet.

6. Data transmission system according to any one of claims 2 through 5,
**characterized in that**
a database and a server (45) are associated with the broadcaster (40), wherein the server (45) is designed for authenticating the receiving device (90) and/or a terminal device connected to the receiving device (90), and for granting access to predetermined items of information that are stored in the database.

7. Data transmission system according to any one of the preceding claims,
**characterized in that**
the security device (170) of the first receiving device (90) has firewall and VPN functionality.

8. Data transmission system according to any one of the preceding claims,
**characterized in that**
the first coupling device (240) is designed in such a way that it can supply secured information, which has been transmitted through the VPN tunnel, to a first LAN interface (182).

9. Data transmission system according to any one of the preceding claims,
**characterized in that**
the WAN interface (110) is designed to connect the first receiving device (90) to a DSL connection, and **in that**
the WAN interface (110) is connected to a DSL modem (120).

10. Data transmission system according to any one of the preceding claims,
**characterized in that**
the first receiving device (90) has a DSL splitter.

11. Data transmission system according to any one of the preceding claims,
**characterized in that**
the first receiving device (90) has at least one second LAN interface (180), which is provided for exchanging unsecured information over the public IP network (60), wherein a second controllable coupling device (140) is designed for controlled connection of the WAN interface (110) to the at least one LAN interface (180) and to the security device (170).

12. Data transmission system according to any one of the preceding claims,
**characterized in that**
the first receiving device (90) has a wireless interface (210) and/or a keypad (220) for controlling the processing device (150).

13. Data transmission system according to any one of the preceding claims,
**characterized in that**
the first receiving device (90) has a card reader (200) associated with the security device (170) and/or a USB port (250) associated with the processing device (150).

## Revendications

1. Procédé de transmission sécurisée de données vidéo et/ou audio via un réseau basé IP (60) publique non sécurisé, selon lequel
a) des signaux vidéo générés par un dispositif d'enregistrement (230) sont transmis vers un télédiffuseur (40) et en plus vers un premier dispositif de reproduction (70) ou vers un deuxième dispositif de reproduction (75) associés à un site de réception;
b) un tunnel VPN (50) sécurisé est établi entre le télédiffuseur (40) et un dispositif de réception (90) associé au site de réception via le réseau basé IP (60) non sécurisé;
b) les signaux vidéo sont codés, par le télédiffuseur (40), en un flux de données vidéo comprimé;
c) le flux de données vidéo comprimé est transmis au dispositif de réception (90) via le tunnel VPN (50); et
d) le flux de données vidéo reçu est décodé et mis à la disposition du premier dispositif de reproduction (70).

2. Système de transmission de données (10) pour la diffusion en direct de flux de données média, comprenant
un réseau basé IP (60) publique non sécurisé,
au moins un premier dispositif de réception (90) associé à un site de réception,
au moins une caméra vidéo (230), les signaux générés par la caméra vidéo étant transmis à au moins un dispositif de reproduction (75) associé au site de réception pour la reproduction des signaux fournis par la caméra vidéo, et à un deuxième dispositif de réception associé à un télédiffuseur (40) pour la réception des signaux fournis par la caméra vidéo (230),
les dispositifs suivants étant associés au télédiffuseur (40) :
un dispositif de sécurité (43, 44) pour l'établissement d'un tunnel VPN (50) sécurisé vers le premier dispositif de réception (90) via le réseau basé IP (60) non-sécurisé, le tunnel VPN faisant fonction de canal de retour,
un dispositif de génération (41) pour la génération d'un signal de programme à partir des signaux fournis par la caméra vidéo (230),
un dispositif de codage (42) pour coder le signal de programme en un flux de données vidéo comprimé, et
un dispositif d'émission pour la transmission du flux de données vidéo comprimé via le tunnel VPN (50) vers le premier dispositif de réception (90) ; et le premier dispositif de réception (90) ayant les caractéristiques suivantes :
une interface WAN (110) pour relier le premier dispositif de réception au réseau basé IP (60),
un dispositif de sécurité (170) pour établir un tunnel VPN (50) sécurisé via le réseau basé IP (60) non sécurisé vers le dispositif de sécurité (43, 44) associé au télédiffuseur (40);
un premier dispositif de couplage (240) apte à être commandé et relié à un dispositif de traitement (150) pour le décodage du flux de données vidéo reçu, et
une interface TV (160) reliée au dispositif de traitement (150) pour la mise en marche du dispositif de reproduction (75) ou d'un dispositif de reproduction (70) supplémentaire associé au site de réception, apte à représenter le flux de données vidéo fourni.

3. Système de transmission de données selon la revendication 2, **caractérisé en ce que** le dispositif de génération (41) pour la génération d'un signal de programme est conçu selon le standard SDI (Serial Digital Interface).

4. Système de transmission de données selon la revendication 2 ou 3, **caractérisé en ce qu'**un dispositif de cryptage pour le cryptage du flux de données vidéo à transmettre est associé au télédiffuseur (40), et **en ce qu'**un dispositif de décryptage pour le décryptage du flux de données vidéo reçu est mis en oeuvre dans le premier dispositif de réception (90).

5. Système de transmission de données selon l'une des revendications 2 à 4, **caractérisé en ce que** le site de réception est un car de reportage (20) et **en ce que** le réseau basé IP (60) est l'internet.

6. Système de transmission de données selon l'une des revendications 2 à 5, **caractérisé en ce qu'**une base de données et un serveur (45) sont associés au télédiffuseur (40), le serveur (45) étant conçu pour authentifier le dispositif de réception (90) et/ou un équipement terminal connecté au dispositif de réception (90) et pour permettre un accès à des informations prédéterminées stockées dans la base de données.

7. Système de transmission de données selon l'une des revendications précédentes, **caractérisé en ce que** le dispositif de sécurité (170) du premier dispositif de réception (90) comporte une fonctionnalité pare-feu et VPN.

8. Système de transmission de données selon l'une des revendications précédentes, **caractérisé en ce que** le premier dispositif de couplage (240) est conçu de manière à pouvoir fournir des informations sécurisées transmises via le tunnel VPN à une première interface LAN (182).

9. Système de transmission de données selon l'une des revendications précédentes, **caractérisé en ce que** l'interface WAN (110) est conçue pour raccorder le premier dispositif de réception (90) à une connexion DSL et **en ce que** l'interface WAN (110) est reliée à un modem DSL (120).

10. Système de transmission de données selon l'une des revendications précédentes, **caractérisé en ce que** le premier dispositif de réception (90) comporte un splitter DSL.

11. Système de transmission de données selon l'une des revendications précédentes, **caractérisé en ce que** le premier dispositif de réception (90) comporte au moins une deuxième interface LAN (180) prévue pour l'échange d'informations non sécurisées via le réseau IP (60) publique, un deuxième dispositif de couplage (140) apte à être commandé étant conçu pour relier, de manière commandée, l'interface WAN (110) à la au moins une interface LAN (180) et au dispositif de sécurité (170).

12. Système de transmission de données selon l'une des revendications précédentes, **caractérisé en ce que** le premier dispositif de réception (90) comporte une interface (210) sans fil et/ou un clavier (220) pour la commande du dispositif de traitement (150).

13. Système de transmission de données selon l'une des revendications précédentes, **caractérisé en ce que** le premier dispositif de réception (90) comporte un lecteur de carte (200) associé au dispositif de sécurité (170) et/ou une connexion USB (250) associée au dispositif de traitement (150).
